(19) Europäisches Patentamt / European Patent Office / Office européen des brevets

(11) **EP 3 980 722 B1**

(12) **EUROPEAN PATENT SPECIFICATION**

(45) Date of publication and mention
of the grant of the patent:
**28.08.2024 Bulletin 2024/35**

(21) Application number: **20740070.6**

(22) Date of filing: **04.06.2020**

(51) International Patent Classification (IPC):
**G01C 21/20** (2006.01)   **G08G 5/00** (2006.01)
**G08G 5/02** (2006.01)

(52) Cooperative Patent Classification (CPC):
**G01C 21/20; G08G 5/0026; G08G 5/0043**

(86) International application number:
**PCT/GB2020/051357**

(87) International publication number:
**WO 2020/245594 (10.12.2020 Gazette 2020/50)**

(54) **DETERMINING AIRCRAFT FLIGHT PATHS**

BESTIMMUNG VON FLUGROUTEN EINES FLUGZEUGS

DÉTERMINATION DE TRAJECTOIRES DE VOL D'AÉRONEF

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **04.06.2019 GB 201907977**

(43) Date of publication of application:
**13.04.2022 Bulletin 2022/15**

(73) Proprietor: **Chartersync Limited
London,
Greater London SW11 1HP (GB)**

(72) Inventor: **WATSON, Simon
London, Greater London SW11 1HP (GB)**

(74) Representative: **Reddie & Grose LLP
The White Chapel Building
10 Whitechapel High Street
London E1 8QS (GB)**

(56) References cited:
**US-A1- 2003 060 940     US-A1- 2018 075 757**

**Description**

TECHNICAL FIELD

This disclosure relates to the field of determining characteristics of an aircraft's flight and to processes and apparatuses that make use of the results of such determinations.

BACKGROUND

It would be desirable to determine characteristics of an aircraft's flight including in particular a origin and/or destination airport. For many aircraft, including the types of aircraft that are typically used in air cargo charters, it can be difficult to determine which aircraft and which operators might be capable of fulfilling a charter request.

In US 2018/0075757 A1, there is described a method comprising: receiving a destination airport for an aircraft; determining whether visibility at the destination airport is below a threshold visibility; in response to a determination that the visibility at the destination airport is below a threshold visibility, notifying the aircraft of the visibility at the destination airport; determining whether ceiling at the destination airport is below a threshold ceiling; in response to a determination that the ceiling at the destination airport is below the threshold ceiling, notifying the aircraft of the ceiling at the destination airport; determining a phase of flight for the aircraft; and in response to determining the phase of flight for the aircraft, providing the aircraft with at least one notification based on the phase of flight for the aircraft. In one example there is described an inferred destination airport algorithm that infers a destination airport from a plurality of airports within a predefined distance (e.g., 50 nmi) from the aircraft's current position by calculating a probability for each airport in the plurality of airports. A calculated probability for an airport represents the likelihood that the pilot intends to land at that airport. Upon generating a plurality of probabilities corresponding to the plurality of airports, the inferred destination algorithm can select an airport from the plurality of airports having the highest probability as the inferred destination airport.

SUMMARY

This disclosure relates generally to methods, systems and computer-readable media for determining an aircraft flight path and elements thereof such as a destination or an origin of an aircraft by: obtaining data comprising a plurality of data points for the flight of an aircraft over a sector, each data point being indicative of a position of the aircraft at a corresponding time; determining the destination or the origin of the aircraft based on the plurality of data points. The data may be multilateration data and the data points may be multilateration data points. The destination or origin of the aircraft may be determined based on the times and positions of the aircraft over time according to data such as the multilateration data, including the latitude, longitude and altitude of the aircraft over a sector at corresponding times.

According to a first aspect of this disclosure, there is provided a computer-implemented method of determining a destination of an aircraft, the method comprising: obtaining data comprising a plurality of data points for the flight of an aircraft over a sector, each data point being indicative of a position of the aircraft including its latitude, longitude and altitude at a corresponding time; determining, based on the data: i) a last data point for the sector that comprises a position of the aircraft and a time for the last-received data point of the aircraft over the sector, ii) a top of descent data point that comprises a position of the aircraft and a time at which the aircraft reached a top of descent, iii) a rate of descent of the aircraft, and iv) an extrapolation distance using the rate of descent of the aircraft and the surface distance travelled by the aircraft between the top of decent data point and the last data point, the extrapolation distance being a surface distance for the aircraft to travel to reach ground; and if the altitude of the aircraft at the last data point for the sector is below an altitude threshold, identifying one or more airports within the extrapolation distance from the position of the aircraft at the last data point for the sector and determining the destination of the aircraft based on the identified one or more airports within the extrapolation distance.

According to a further aspect of this disclosure there is provided a system comprising a memory and one or more processors configured to carry out a method according to any of the above-described methods.

According to a further aspect of this disclosure, there is provided a computer-readable medium having instructions stored thereon that, when executed by one or more processors, cause the one or more processors to carry out a method according to any of the above-described method. Preferably, the computer-readable medium is a non-transitory computer-readable medium.

Preferred embodiments are set out in the dependent claims.

This summary is not intended to identify essential subject-matter, nor is it intended to be used in isolation to determine the scope of the claimed subject-matter.

The details of one or more examples are set forth in the accompanying drawings and the description below. Other features, objects, and advantages will be apparent from the description and drawings, and from the claims.

BRIEF DESCRIPTION OF DRAWINGS

The invention will be described in more detail by way of example with reference to the accompanying drawings, in which:

Figure 1 illustrates an example computer system on which a method embodying an aspect of the invention operates;
Figure 2 illustrates an altitude-time profile for an aircraft and identifies key points in the profile that may help in determining details of the aircraft's flight including destination and origin airports;
Figure 3 is a flowchart illustrating a process of determining origin and destination airports for each aircraft in a group of one or more aircraft;
Figure 4 is a flowchart illustrating a process by which the information on the aircraft's flight including destination and origin airports may be used, the process being determination as to whether an aircraft is capable or available to potentially fulfil a charter request; and
Figure 5 is a graph of payload and range depicting the variation of an aircraft's range as a function of payload.

DETAILED DESCRIPTION

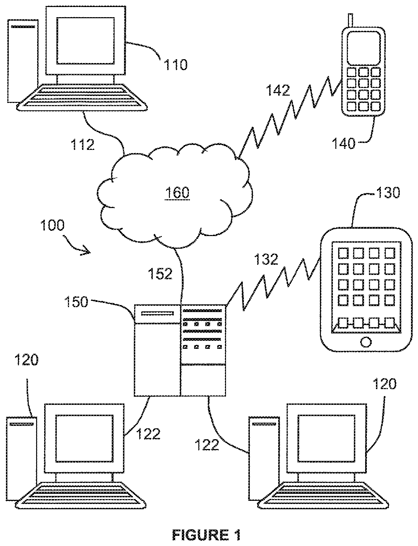

Figure 1 illustrates an example computer system on which a method embodying an aspect of the invention operates. The computer system includes a server 150 to which one or more computer terminals 120 are connected through wired connections 122. The computer terminals 120 are shown as desktop computers. However, the computer terminals may be other devices such as laptop computers, smart phones or tablet computers. The wired connections 122 may be through Ethernet connections of a local area network. As an alternative to wired connections, the computer terminals 120 may be connected to the server through wireless connections or through connections that have wired and wireless portions. For example, Figure 1 shows a tablet computer 130 connected to the server 150 through a wireless connection 132. The server 150 is shown as connected to the internet 160 through wired connection 152. This allows other computer terminals that are not in a close enough geographic proximity for direct wired or wireless connection to the server 150 to be connected to the server 150. For example, in Figure 1, a computer terminal 110 is connected to the internet 160 through wired connection 112. The computer terminal 110 is shown in Figure 1 as a desktop computer purely as an example. A further example is a cellular phone 140 that is connected to the internet 160 through a wireless connection 142. The cellular phone 140 may be a smart phone.

The server 150 is shown in a local area network with computer terminals 120 directly connected to the server 150 through wired connections 122. Alternatively, the server 150 may be located in a cloud-computing environment. In such cases, the server 150 may be a virtual server running on a virtual machine on a physical server. There may be multiple virtual servers running on virtual machines on a server. According to resource requirements and availabilities, the virtual servers may be scaled up, scaled down, or moved around between physical servers.

Almost all aircraft include at least one transponder. A transponder is an electronic device that transmits information about the aircraft in response to interrogation by a radiofrequency signal. There is more than one type of transponder, including a mode-s transponder and an ADSB transponder. These transponders have different capabilities.

Many aircraft only possess a mode-s transponder. Unlike an ADSB transponder, a mode-s transponder does not transmit any GPS-linked position data when interrogated by radar. With the lack of position data, the multilateration (MLAT) technique is used to identify the location of mode-s transponder aircraft. For this, a radio signal is transmitted from the radar station to aircraft equipped with a mode-S transponder. The transponder then transmits a radio signal back to the original transmitter station. The time separation from the original transmission by the radar station to receiving the relayed radio signal is measured. This technique is named the Time Difference of Arrival (TDOA) method. With the time delay known from several receiver stations, the aircraft position can be calculated.

The MLAT technique currently requires 4 ADSB receivers to be within range and line of sight of the aircraft. This limitation can result in the loss of aircraft position data bellow an altitude of approximately 4,000ft.

Data feeds of location data for aircraft are available. One example is Flightradar24, which provides a websocket JSON data feed with a five second update with fields as set out in Table 1 below:

TABLE 1

| # | name | description |
|---|------|-------------|
| 1 | aircraft_id | mode-S address in hexadecimal |
| 2 | latitude | floating point degrees |
| 3 | longitude | floating point degrees |

(continued)

| # | name | description |
|---|------|-------------|
| 4 | track | true track (over ground) in integer degrees, 0-359 |
| 5 | altitude | in feet |
| 6 | speed | ground speed in knots |
| 7 | squawk | octal format, e.g. 7700 for general emergencies |
| 8 | radar_id | radar identifier number2 |
| 9 | type | ICAO equipment code, e.g. B733 |
| 10 | registration | text in hyphenated format, e.g. LN-ABC |
| 11 | last_update | sample time in seconds since midnight 1 Jan 1970 UTC / GMT |
| 12 | origin | departure airport's IATA code, e.g. KKN4 |
| 13 | destination | arrival airport's IATA code |
| 14 | flight | flight number, e.g. DY311 |
| 15 | onground | indication of flight status, 1 for on ground or else 0 in flight |
| 16 | vspeed | vertical speed in feet per minute |
| 17 | callsign | e.g. NAX11S |

An example JSON object for a single flight is provided as a reference:

```
"171e09e" : ["a96c96",
    40.593,
    -73.4894,
    10,
    4000,
    244,
    13089,
    254,
    "B752",
    "N706TW",
    1372636803,
    "SEA",
    "JFK",
    "DL1154",
    0,
    0,
    "DAL1154",
    0
```

Another example is ADSB Exchange, which provides a TCP port feed with a five second update. The techniques of this disclosure may be implemented using a single data feed or by using multiple data feeds, such as using Flightradar24 (FR24) and ADSB Exchange (ADSBE) data feeds.

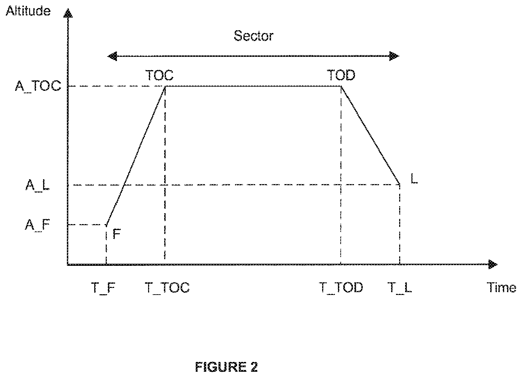

Figure 2 is a graph of a 'sector' of the flight of an aircraft, plotting altitude against time. The graph shows altitude against time defined between certain points - F, TOC, TOD and L - that are used in the techniques of this disclosure to determine further details of a sector.

The TOC, or top of climb, is the first altitude point, A_TOC, measured in feet, after which all proceeding reported altitudes, A_TOC+n recorded within a 10-minute time frame are within 500ft of A_TOC.

$$A\_TOC + 500ft \geq A\_TOC+n \geq A\_TOC - 500ft \qquad \text{[Equation 1]}$$

The 500ft altitude buffer takes account of reading errors and multilateration accuracy errors preventing incorrect TOC point identification. More than one point can exist that fulfils the TOC criteria, however the first valid TOC point is used as following points represent step climbs of the aircraft due to fuel burn off and optimum flight level changes.

In some embodiments a different definition of TOC is used, whereby the 10-minute time frame is replaced by a variable time frame, the length of which depending on the flight time, defined as the time between F and L. For example, if the time between F and L is greater than 30 minutes a 10 minute time frame is used, but if the time difference is between 20 and 30 minutes a 5 minute time frame is used, and if the time difference is less than 20 minutes then a 3 minute time frame is used. Either definition, or indeed another definition as will be apparent to the skilled reader, may be used with the techniques of this disclosure.

The TOD point is defined as the altitude point, A_TOD after which all proceeding altitudes are less than A_TOD with a consistently negative vertical speed. Once the altitude has decreased by greater than 1,000ft below A_TOC the position of the TOD can be established. Only one value of TOD can exist, with following valid point representing stepped descents due to air traffic control (ATC) restrictions. In some embodiments an additional rule is applied in case TOC is undefined: the TOD point is defined as the altitude point A_TOD after which all proceeding altitudes are less than ATOD with a consistently negative vertical speed. Once the altitude has decreased by greater than 1,000ft below the highest altitude reached during the sector the position of the TOD can be established. Either definition, or indeed another definition as will be apparent to the skilled reader, may be used with the techniques of this disclosure.

The vertical speed is defined as the rate of change of altitude (ft) with respect to time (minutes). For its measurement, a minimum of two points of altitude are required, recorded at a known time interval.

$$\text{Vertical speed (fpm)} = \Delta \text{ Altitude (feet)} / \Delta \text{ time (minutes)} \qquad \text{[Equation 2]}$$

A sector is the flight path that takes place between the first, F, reported position of an aircraft and the last recorded position, L, between the origin and destination airports. For calculation, it is assumed that the aircraft will always have positive vertical speed from F to TOC and negative vertical speed from TOD to L.

According to techniques of this disclosure it is also advantageous to determine a distance between two points on the earth's surface. The Haversine formula can be used to calculate the great-circle distance between two points of latitude and longitude on the earth's surface. Where $\varphi$ is latitude in radians, $\lambda$ is longitude in radians, and R is the earth's mean radius in kilometres (6371 km), the distance in nautical miles between $(\varphi_2, \lambda_2)$ and $(\varphi_2, \lambda_2)$ can be obtained by the following:

$$\text{distance (in nm)} = R \cdot c \cdot 0.539957 \qquad \text{[Equation 3]}$$

$$\text{where } c = \text{atan2} (\sqrt{a}, \sqrt{(1-a)}) \qquad \text{[Equation 4]}$$

$$\text{where } a = \sin^2((\varphi_2 - \varphi_1) / 2) + \cos(\varphi_1) \cdot \cos(\varphi_2) + \sin^2((\lambda_2 - \lambda_1) / 2) \qquad \text{[Equation 5]}$$

where atan2 is the two-argument arctangent defined for arguments x and y as the angle (in radians) in the Euclidean plane between the positive x axis and the ray to the point (x, y).

It is possible to obtain data feeds that provide information on aircraft

The FlightRadar24 websocket feed and ADS-B exchange TCP connection provides the origin and destination fields together with the on ground or in air indicator (Flightradar24 field 15) and squawk. These four sources of information allow for identification of each flight sector. However, due to a lack of data or coverage some of these fields may be omitted resulting in unreliable flight sector information. To eliminate any erroneous results the raw data fields of latitude, longitude and altitude will be taken from FlightRadar24 and ADS-B exchange. The aircraft location microservice will then interpret this raw data to establish each flight sector with its associated F, TOC, TOD and L points.

The use of two separate data feeds will generate two independent sets of values for each sector which will differ depending on MLAT coverage. The estimated most accurate values of F, TOC, TOD and L are determined so that any interpretation techniques employed in the airport identification stage are as accurate as possible. This issue does not arise when a single data feed is used.

In the use of two data feeds, the FR24 and ADSBE data feeds, both feeds provide for an aircraft the current aircraft location (latitude, longitude) and altitude. The data received from both feeds is stored, along with the time at which the data was obtained. The use of two separate data feeds will generate two independent sets of values for each sector which will differ depending on MLAT coverage of each feed. The most accurate values of F, TOC, TOD and L will need to be determined so that any interpretation techniques employed in airport identification are as accurate as possible.

L is defined as the last received data point every 5 seconds, with L-1 and L-2 the two previous recorded points. If there is a period of no new data for 20 minutes, any further data points received after L are designated as point n, n+1, n+2... and so on.

For a new point, n, recorded at a time greater than 20 minutes after L, the time separation between L and n is compared to the great circle distance between the two points to logically determine if the new point n is generated from a new sector. A buffer of 30% for the time taken is used to take account of airway routing or ATC track deviation resulting in time discrepancies.

If the time between L and n is less than the time taken for the aircraft to travel great circle distance between the latitude and longitude positions of the aircraft at L and n plus a buffer, in this case 30%, then it is assumed that L and n are both points on the same sector for the aircraft. L can be set to n, indicating that these new data point is the last received data point of the same sector. Otherwise the new point n is treated as a new point in a new sector for the aircraft, i.e. set as a first received point F for the new sector.

With values of F, L, TOC and TOD defined, each flight sector is identifiable making it possible to identify the origin and destination airports. Before proceeding with airport identification, the most accurate values of L, TOC, TOD and F are established from both the Flightradar24 and ADSB data feeds according to the following:

In the case of the first reported position, F, most accurate value of F is the earliest recorded point which possess the lowest altitude. In some embodiments, if the earliest F is not the same as the lowest F, and only one of the two (or more, in the case of more than two feeds) F values is below 3000ft, then the one below 3000ft is picked; otherwise the earliest F is picked.

In the case of the last reported position, L, the most accurate value of L is the latest recorded point which possess the lowest altitude. In some embodiments, if the latest L is not the same as the lowest L, and only one of the two (or more, in the case of more than two feeds) L values is below 3000ft, then the one below 3000ft is picked; otherwise the earliest L is picked.

In the case of the top of climb, TOC, the most accurate TOC point is one which has been recorded the earliest or, if one value of TOC is greater than the other by more than 1,000ft then this point is selected.

In the case of the top of descent, TOD, the altitude of the most accurate value of TOD, TOD will have the highest number of data samples either side of the TOD point.

In the case of some feeds, a timestamp is not provided and so it is necessary to apply a timestamp based on the time at which the feed is accessed (e.g. every 5 seconds). For example, the ADSBE data feed does not time stamp. This means that FR24 data and ADSBE data are not synced. To assist comparison of data from the feeds, the data points can be synced. This is started by collecting data in a 1 minute batch (up to 24 samples, 12 from each source) and running a plausibility check on the recorded data. If the distance between the aircraft positions of two samples of the same source divided by the time difference from a new sample to a preceding sample suggests a speed equal to more than three times the aircraft's cruising speed (which may be obtained beforehand), then the new sample is discarded. If the distance/time for an ADSBE sample compared with the last sample from FR24 suggests a speed equal to more than five times the cruising speed, then the sample is discarded. Once this check has been performed, bad data is discarded and the data feeds can be supplied to airport identification algorithms.

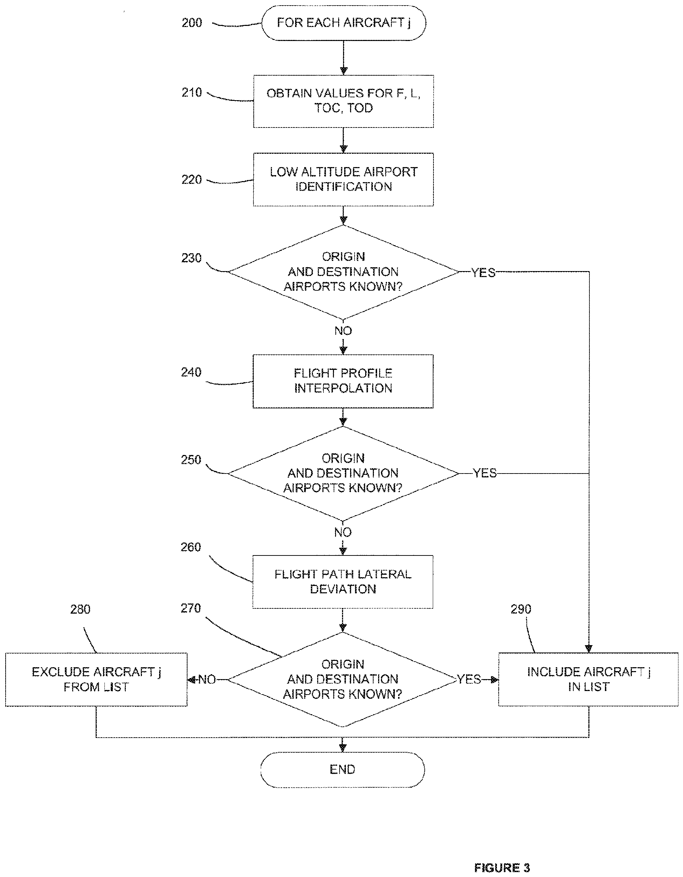

Figure 3 is a flowchart illustrating an example process for determining origin and destination airports for an aircraft's flight on a sector based on values of F, L, TOD and TOC, the values of F, L, TOD and TOC including the latitude and longitude positions, altitudes of the aircraft at F, L, TOD and TOC and the times at which the aircraft is/was at the points F, L, TOD and TOC. As F, L, TOD and TOC values are obtained from both FR24 and ADSBE data feeds, an estimated most accurate version each value is selected according to the techniques set out above.

The process of determining origin and destination airports is performed for each aircraft within a group of one or more aircraft, each aircraft being denoted by a respective index j. The process begins at step 200 for each aircraft j of the group of one or more aircraft.

First at step 210 values of F, L TOC and TOD are obtained for aircraft j. Further details of how these values are obtained are set out below.

At step 220 a first sub-process for determining the origin and destination airports is performed, the first sub-process being a low altitude airport identification process, of which further details are set out below.

Following the low altitude airport identification process a check is made at step 230 as to whether the origin and destination airports are known following the low altitude airport identification process at step 220.

If the origin and destination airports for aircraft j are not known at step 230, then the process advances to step 240 at which a second sub-process for determining the origin and destination airports is performed, the second sub-process being a flight profile interpolation process, of which further details are set out below.

Following the flight profile interpolation process a check is made at step 250 as to whether the origin and destination airports are known following the low altitude airport identification process at step 240.

If the origin and destination airports for aircraft j are not known at step 250, then the process advances to step 260 at which a third sub-process for determining the origin and destination airports is performed, the third sub-process being a flight path lateral deviation process, of which further details are set out below.

Following the flight path lateral deviation process a check is made at step 270 as to whether the origin and destination airports are known following the flight path lateral deviation process at step 240.

If the origin and destination airports for aircraft j are not known at step 270, then at step 280 the aircraft j is excluded from the list of aircraft for which the origin and destination airports are known.

If the origin and destination airports for aircraft j are known at any of steps 230, 250 and 270, then at step 290 the aircraft j is included in the list of aircraft for which the origin and destination airports are known.

Based on these sub-processes a list of aircraft can be obtained for which the origin and destination airports are known for the aircraft on the sector to which the parameters F, L, TOC and TOD relate.

Thus in the example process of Figure 3, a series of sub-processes are performed for an aircraft using F, L, TOD and TOC parameters, the sub-processes being performed in sequence. If one sub-process obtains destination and origin airports, then the process ends with the aircraft being added to a list of aircraft for which destination and origin airports are known. If none of the sub-processes obtains destination and origin airports, then the process ends with the aircraft not being added to a list of aircraft for which destination and origin airport are known.

The particular sub-processes are used in combination in Figure 3 as a sequence of attempts to determine the origin and destination airports of an aircraft. The ordering of the sequence of sub-processes, i.e. the low-altitude process 220 followed by the flight profile interpolation process 240 followed by the flight path lateral deviation process 260 is preferred. In addition the particular combination allows for determining the origin and destination airports of aircraft with a high degree of accuracy, particularly compared with origin and destination airports specified in the data feeds. The accuracy rates for the origin and destination airports specified in the data feeds can be low, e.g. between 10% and 30% accurate. This is due to how these feeds are generated, whereby the origin and destination airport data included in the feeds might be out of date. For applications where it is important to know the origin and destination airports of an aircraft with a higher degree of accuracy, the origin and destination fields within the data feeds by themselves might not be sufficiently reliable.

According to the low altitude airport identification process 220, an attempt to determine the origin airport is as follows:

Firstly, if the altitude in feet of point F (i.e. $A\_F$) is recorded at $\leq 3,000$ft and one airport lies within the distance in nautical miles given by the expression $(A\_F/1000*3)+3$ of point F's latitude and longitude position (i.e. lat_F, long_F, the distance determined by great circle) then this airport is designated as the origin airport.

If more than one airport lies within $(A\_F/1000*3)+3$ of point F's latitude and longitude position and the origin is not yet known, then:

    i) If one of the airports is the aircraft's previous destination then this airport is set as the origin airport.

    ii) If one of the airports is the aircraft's designated home base then this airport is set as the origin airport.

    iii) If one of the airports is the aircraft's designated engineering base then this airport is set as the origin airport.

    iv) If the aircraft has flown to one of the airports in the past then this airport is set as the origin airport.

In other embodiments, some or all of these check steps may be omitted, reordered or replaced.

According to the low altitude airport identification process 220, an attempt to determine the destination airport is as follows:

Firstly, if the altitude in feet of point L (i.e. $A\_L$) is recorded at $\leq 3,000$ft and one airport lies within the distance in nautical miles given by the expression $(A\_L/1000*3)+3$ of point L's latitude and longitude position (i.e. lat_L, long_L, the distance determined by great circle) then this airport is designated as the destination airport.

If more than one airport lies within $(A\_L/1000*3)+3$ of point L's latitude and longitude position and the destination is not yet known, then:

    i) If one of the airports is the aircraft's designated home base then this airport is set as the destination airport.

    ii) If one of the airports is the aircraft's designated engineering base then this airport is set as the destination airport.

    iii) If the aircraft has flown to one of the airports in the past then this airport is set as the destination airport.

    iv) If point L lies within a 2 nautical mile lateral deviation of the or an extended runway centreline of one airport then this airport is set as the destination airport. The extended runway centreline is the line (i.e. great circle) across the earth's surface (and all latitude and longitude points on that line) extending from the airport or specifically the or a runway of the airport in the direction in which the runway lies. In other embodiments a 0.5 nautical miles 1 nautical mile threshold is used.

v) If more than one extended runway centreline lies within 2 nm of point L's latitude and longitude position then check if the 'track' of the aircraft of point L and L-1 (wherein L-1 is a data point immediately preceding L) lies within 30 degrees of the runway direction of one of these airports. The track indicates the direction of travel of the aircraft. The track is the bearing between the latitude and longitude positions at L and the latitude and longitude positions at L-1, the last-but-one data point received for the sector, relative to true north.. vi) If the aircraft track of L and L-1 lies within 30 degrees of the runway direction of more than one airport then check if the aircraft's direction of travel lies within 60 degrees of the bearing of the airport's location from the aircraft relative to true north. If the aircraft's direction of travel lies within 60 degrees of the bearing from the aircraft to only one airport's location then set this airport as the destination airport. In other embodiments a 45 degree threshold is used.

In other embodiments, some or all of these check steps may be omitted, reordered or replaced.

If either origin or destination airport is not known after the low altitude airport identification process 220 then the process proceeds with flight profile interpolation 240.

The flight profile interpolation process 240 uses interpolation of recorded data to predict a future and historical flight path of an aircraft. The interpolation process may be viewed as an extrapolation. To determine the origin airport according to this process, an initial check is made to confirm that F and TOC have defined values. If either are not defined, then this process to determine the origin airport is not performed, since it requires these values. A further check is made to see if the altitude at data point F from either of the FR24 or ADSBE data feeds for the sector is greater than 10,000 feet. If they are both greater than 10,000 feet then this process to determine the origin airport is not performed. If one is greater than 10,000 feet and the other is less than 10,000 feet, then the below method is performed without using data of the feed for which F has an altitude greater than 10,000 feet. This is because it would generate ambiguous results by the interpolation method. Also, if the origin airport has already been determined according to the low-altitude airport identification process then the interpolation process to determine the origin airport is not performed.

The process proceeds by determining if the change in altitude over the first 5 minutes from point F was less than 2,500 feet. If it is less than 2,500 feet then the distance travelled by the aircraft using the FR24 data feed points between point F and point TOC is calculated. This may be as the great circle distance between the points of latitude and longitude. Then the proportional distance that would have been travelled to reach an altitude of F from the ground (0 feet altitude) is calculated. This distance is termed distance_origin_FR24. If the change in altitude over the first 5 minutes was greater than 2,500ft, then a check is made as to whether the TOC altitude from the FR24 feed is greater than double the F altitude from the FR24 feed. If it is greater, the distance that the aircraft travelled from point F to an altitude of twice that of point F is calculated and set as distance_origin_FR24. Thus distance_origin_FR24 is either the distance that the aircraft travelled from point F to an altitude of twice that of point F, or the proportional distance that would have been travelled to reach an altitude of F from the ground. The same process is used to calculate the proportional distance distance_origin_ADSBE using the F and TOC altitudes of the ADSBE data feed.

Next it is determined if any airports are located within the region defined by the radius equal to distance_origin_FR24 from point F of the FR24 feed and within the region defined by the radius equal to distance_origin_ADSBE from point F of the ADSBE feed.

If either region contains only one airport and the origin is not previously known then it is set as the origin airport. If the FR24 feed indicates the origin already (possibly obtained from pre-filed flight plan data) and the one airport in either list is not equal to the origin airport from the FR24 feed and the one airport in either list is the same as the destination airport of the previous flight of the aircraft, then the origin of the flight is set equal to the one airport.

If either region contains more than one airport then, if one is the destination airport of the previous flight, it is set as the origin airport. If not, and if one is the aircraft's designated home base, then it is set as the origin airport. If not, and if one is the aircraft's designated engineering base, then it is set as the origin airport. If not, and the aircraft has flow to one of the airports in the past (which may be determined from historic data feeds), then it is set as the origin airport.

If no airports are contained within either of the regions, then the check is performed again, with the regions recalculated with 5 nautical miles added to each of distance_origin_ADSBE and distance_origin_FR24.

As with determining the destination airport according to this process, an initial check is made to confirm that L and TOD have defined values. If either are not defined and then this process to determine the destination airport is not performed, since it requires these values.

A further check is made to see if the altitude at data point L from either of the FR24 or ADSBE data feeds for the sector is greater than 10,000 feet. If they are both greater than 10,000 feet then this process to determine the destination airport is not performed. If one is greater than 10,000 feet and the other is less than 10,000 feet, then the below method is performed without using data of the feed for which L has an altitude greater than 10,000 feet. This is because it would generate ambiguous results by the interpolation method.

Also, if the destination airport has already been determined according to the low-altitude airport identification process then the interpolation process to determine the destination airport is not performed.

The process proceeds by determining if the change in altitude in the preceding 5 minutes from point L was less than 2,500 feet. If it is less than 2,500 feet then the distance travelled by the aircraft using the FR24 data feed points between point L and point TOD is calculated. This may be as the great circle distance between the points of latitude and longitude. Then the proportional distance that would have been travelled to reach an altitude of L from the ground (0 feet altitude) is calculated. This distance is termed distance_destination_FR24.

If the change in altitude over the preceding 5 minutes from point L was greater than 2,500ft, then a check is made as to whether the TOD altitude from the FR24 feed is greater than double the point L altitude from the FR24 feed. If it is greater, then it is determined whether the vertical speed of the aircraft dropped below 200 feet per minute at any time between TOD and L using the FR24 data.

If the vertical speed did not drop below 200 feet per minute, then the distance across the earth's surface that the aircraft travelled from point L to an altitude of twice that of point L is calculated and set as distance_destination_FR24.

If the vertical speed did drop below 200 feet per minute at some point between TOD and L using the FR24 data, then a distance between the position of the aircraft at L and the position of the aircraft at the data point after which the vertical speed rose above 200 feet per minute is calculated. The using this distance, proportional distance that the aircraft would have travelled to reach L's altitude from ground (0 feet altitude) is amd set as distance_destination_FR24. If the TOD altitude is less than twice L's altitude, then the proportional approach as is used as per when the change in altitude is less than 2500 feet.

The same process is used to calculate the proportional distance distance_destination_ADSBE using the L and TOD altitudes of the ADSBE data feed.

Next it is determined if any airports are located within regions defined by the distances (by great circle) distance_destination_FR24 and distance_destination_ADSBE from points L of FR24 and L of ADSBE respectively. If either region contains only one airport then it is designated the destination airport for the aircraft's sector.

If more than one airport is present in the regions then:

i) If one of the airports is the aircraft's designated home base then this airport is set as the destination airport.

ii) If one of the airports is the aircraft's designated engineering base then this airport is set as the destination airport.

iii) If the aircraft has flown to one of the airports in the past then this airport is set as the destination airport.

If no airports are identified in either region then the distances from respective positions of L according to the data feeds are increased by 5 nautical miles. If either expanded region contains only one airport then this is set as the destination airport.

If either origin or destination airport is not known after the interpolation (extrapolation) approach then the process proceeds with the flight path lateral deviation approach, which analyses the recorded lateral deviation of the aircraft from the accurate TOC-TOD path line of the accurate points F and L that were previously determined using the data feeds. With both TOC and TOD points identified, an extended line of intercept may be constructed is drawn as a great circle that intercepts both points.

The track deviation (Left/Right of track) to the TOC-TOD intercept line is determined for both points F and L.

If only one airport in a region taken from the preceding airport identification techniques is located on the same side as the TOC-TOD intercept line as the track deviation of point F/L respectively, then this airport is set as the origin/destination airport.

Once the airport origin and destination of an aircraft is known, it is possible to determine (estimate) the time of arrival of the aircraft at its destination and the time of departure of the aircraft from its origin. In the case of the time of departure, the time taken for the aircraft to fly from the origin airport to point F can be estimated based on determining the great circle distance between the latitude and longitude of point F and the latitude and longitude of the origin airport, and the cruise speed of the aircraft (which may be known in advance). The estimated time of departure is obtained by subtracting the estimated time to fly from the origin airport to point F from the time of point F.

By the same approach the time of arrival can be estimated: the time taken for the aircraft to fly to the destination airport from point L can be estimated based on determining the great circle distance between the latitude and longitude of point L and the latitude and longitude of the destination airport, and the cruise speed of the aircraft. The estimated time of arrival is obtained by adding the estimated time to fly to the destination airport from point L to the time of point F.

Figure 4 is a flowchart illustrating a method 1000 of sending charter requests to operators of aircraft, wherein the operators may be predicted, based on the techniques of this disclosure, to have an aircraft in position at the necessary time to potentially fulfil a charter request.

At step 1010 a charter request is received. The charter request includes information relating to the cargo size, for example total weight, total volume, the dimensions and the like. The charter request may also include information on the number of individual items in the cargo, for example the number of individual pallets, as well as size information for each item such as the weight, volume and dimensions of each item in the cargo. The charter request may include information on the cargo type, for example whether the cargo contains dangerous or restricted goods. The charter request may include information on the cargo type, for example whether the cargo contains dangerous or restricted goods. The charter request includes information on the destination airport for the cargo and the Required Estimated Arrival Time (RETA). The charter request includes information on the departure airport for the cargo and may include information of the current location of the cargo. The method then proceeds to step 1020.

Step 1020 checks whether an operator's aircraft j is 'active'. The status of an aircraft, whether it is active or not, may be included on the database information. For example an operator's aircraft may be considered 'active' by default when uploaded onto the database. An operator can specify that an aircraft is unavailable for requests due to technical or operational reasons. The aircraft is then given an 'inactive' status.

If aircraft j is active the method proceeds to step 1030. If aircraft j is found to be inactive the method returns to step 1020 for aircraft j+1 of the set of aircraft. The set of aircraft may be all aircraft included on the database, or a subset of the database aircraft.

Step 1030 checks whether aircraft j meets the 'packing' criteria of the charter request, i.e. whether the cargo might be accommodated within the aircraft. The database information may contain details of the dimensions of the hold of the aircraft, the maximum payload of the aircraft, the capacity of the aircraft, the size of the doors on the aircraft, any restrictions on the type of cargo allowed to be carried on the aircraft and the like. By comparison with the information in the cargo request it is determined whether the aircraft j is able to carry the requested cargo. For example the dimensions of each item of the cargo may be compared with the size of the doors on the aircraft. If any item in the cargo is larger than the aircraft door then the aircraft will be unable to carry the cargo. Such a check may be performed for each dimension of each item of cargo. Similarly, if the total volume of the cargo is larger than the aircraft capacity then the aircraft will be unable to carry the cargo. If it is determined that aircraft j is unable to carry the requested cargo the method returns to step 1020 for aircraft j+1. In other words, a charter request is not sent to an operator of an aircraft in respect of that aircraft if it is predicted, based on known cargo carrying capabilities of the aircraft, that it will not be able to accommodate the cargo. If it is determined that aircraft j is able to carry the requested cargo the method proceeds to step 1040.

Step 1040 checks whether aircraft j can reach the destination airport before the RETA. The database information may contain information including the cruising speed, ferry range, max range, permitted airports or jurisdictions in which the aircraft can operate and the like. This information is then used in conjunction with data such as the aircraft's current location, live data feeds, historical flight data and the like to identify if aircraft that can reach the destination airport by the RETA. For example the method may identify, based on live data feeds, an airport to which the aircraft is due to land, and estimate the landing time of the aircraft. The method can then calculate based on, for example, the aircrafts speed information, or historical flight times, whether the plane can travel from the airport at which the plane is due to land to the destination airport before the RETA. This check may incorporate any or all of the above-described techniques for determining a destination or origin airport for an aircraft. Based on a current location of an aircraft, a destination airport and the known cruise speed, the arrival time at that airport and possible availability for charter from that time onwards, may be determined for that aircraft. If it is determined that aircraft j is unable to reach the destination airport before the RETA the method returns to step 1020 for aircraft j+1. If it is determined that aircraft j is able to reach the destination airport before the RETA the method proceeds to step 1050.

At step 1050 the charter request is sent to the operator. The method then returns to step 1020 for aircraft j+1. In this way the method loops over the available aircraft. Alternatively the checks for the aircraft may proceed in parallel. If the operator has more than one aircraft, the charter request is indicated for the specific aircraft that the method has identified as a suitable aircraft to execute the charter request.

The method therefore sends the charter request to each operator that is estimated to be able to carry the cargo and able to reach the destination airport before the RETA. Each operator that receives the request is then able to accept or reject the charter request as desired.

In some instances chartering more than one aircraft may cost less than chartering one larger aircraft with a higher total payload. This depends on the dimensions, location and composition of cargo. Therefore some embodiments include an additional step to identify aircraft which meet all parameters to fit the cargo other than that the total weight of the cargo exceeds a maximum payload of the aircraft. If the total weight of the cargo is less than the maximum payload of multiple aircrafts combined, for example two aircraft together, and it is identified that all aircrafts can reach the destination airport before the RETA, then the charter request can be sent as a combined request for the multiple aircraft.

The sending of the charter request to the operator may be performed electronically using any technique familiar to the skilled reader. For example, the charter request may be sent to the operator via email or the charter request may appear on a website to which the operator has access.

In an embodiment, step 1030 of Figure 4 is implemented as follows: First it is determined whether the aircraft meets any dangerous goods class requirements of the cargo according to the charter request. Assuming it does, it is then determined whether the total weight of the cargo is less than the aircraft's maximum payload. Assuming it is, it is determined whether the total weight divided by the maximum payload is less than the operator's load factor. Assuming it is, it is then determined if the aircraft is configured as a passenger-carrying aircraft. This may be known in advance. If the aircraft is configured as a passenger-carrying aircraft, then it is determined if the cargo is a carry-on cargo that may be accommodated in the passenger-carrying area of the aircraft. If so, it is determined if the weight of the cargo (per item) is less than a maximum weight per item, and whether the cargo dimensions (per item) fit within a maximum allowed dimensions per item. If so, then the aircraft may be suitable for charter. If the aircraft is not configured as a passenger carrying aircraft (or if it is but the cargo cannot be accommodated in the passenger carrying area of the aircraft), then it is determined if the total volume of the cargo is less than the volume of the aircraft's cargo hold. If it is, then each item of the cargo is checked that it meets door dimension requirements and that each item meets hold dimension requirements. If so, then the aircraft may be suitable for charter.

To determine if the aircraft could meet the RETA requirements of step 1040, the time of arrival of the aircraft at its (current) destination airport is determined and the routing required to reach the departure and arrival airports according to the charter request is determined.

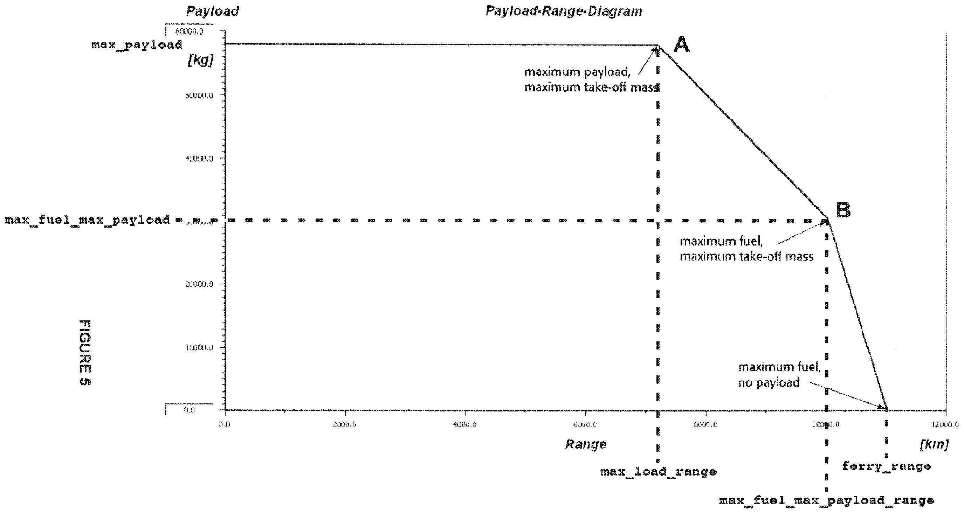

Figure 5 shows a payload-range diagram depicting the variation of an aircraft's range as a function of payload. Point A represents the maximum range with maximum payload and point B represents the maximum payload with maximum fuel.

Certain conditions need to be satisfied for the aircraft to be capable of fulfilling the charter request:

Ferry range ≥ distance from aircraft current location to departure airport distance.

and

Payload range ≥ distance from requested departure airport to requested arrival airport.

The ferry range is the maximum range an aircraft can fly empty for a positioning sector. This usually means maximum fuel load, optionally with extra fuel tanks and minimum equipment. It refers to transport of aircraft without any passengers or cargo.

It is assumed that the payload range varies as a linear function of the payload, between the upper bounds of max_fuel_max_payload_range and lower bounds of max load_range, wherein the maximum load range is the maximum range an aircraft can fly with maximum payload. As can be seen in Figure 5, for payloads greater than max_fuel_max_payload, the max_fuel_max_payload_range is approximated to represent the maximum range of the aircraft (ferry_range).

Aircraft must also satisfy the following formulae:

Request time (UTC)+ TDA <MRDT

Where TDA is the time to departure airport and MRDT is the minimum required departure time. MRDT is given by

MRDT= RETA -flight time from departure_airport to arrival_airport - time for loading cargo

In one embodiment the time for loading cargo is set as 45 minutes although in other embodiments the time for loading cargo may be a variable that is a function of the cargo, the aircraft, or both. Distances are calculated as great circles.

In Table 2 set out below, aircraft are classified into multiple levels of availability.

TABLE 2

| Availability level of aircraft | Description | TDA |
|---|---|---|
| 1 | Aircraft currently located at departure airport | 0 |

(continued)

| Availability level of aircraft | Description | TDA |
|---|---|---|
| 2 | Aircraft currently located at another airport or home base airport | Flight time from current airport to departure airport +90 minutes (aircraft preparation time) |
| 3 | Aircraft currently flying to departure airport | Calculate flight time left |
| 4 | Aircraft currently flying to another airport | Calculate flight time left + service work (45 min) + time from current airport to departure airport |

These classes of availability may be illustrated by the following example, in which the input data is: Request time 08:00 a.m. RETA 17:00 p.m. UTC, departure airport = London Southend, arrival airport = Warsaw.

List of appropriate aircraft resulting from stage 1:

Aircraft 1: Current location Southend, 08:00 a.m.+ 0 < 12:15 p.m. (17:00 p.m. - 4 hours - 45 min). Conclusion: Send request to operator.
Aircraft 2: Current location Manchester, 08:00 a.m.+ 20 min 60 min = 09:20 a.m. < 12:15 p.m. (17:00 p.m. - 4 hours - 45 min). Conclusion: Send request to operator.
Aircraft 3: Currently flying to Southend (2 hours left), 08:00 a.m.+ 2 hours = 10:00 a.m. < 12:15 p.m. (17:00 p.m. - 4 hours - 45 min). Conclusion: Send request to operator.
Aircraft 4: Currently flying to Paris (3 hours left), 08:00 a.m.+ 3 hours + 45 min + 1 hour = 12:45 p.m. > 12:15 p.m. (17:00 p.m. - 4 hours - 45 min). Conclusion: Don't send request to operator.

Based on this approach it can be predicted or determined whether the aircraft is capable of meeting the charter requirements.

The skilled reader will appreciate that the various illustrative logical blocks, configurations, modules, circuits, and algorithm steps described in connection with the embodiments disclosed herein may be implemented as electronic hardware, computer software, or combinations of both. To clearly illustrate this interchangeability of hardware and software, various illustrative components, blocks, configurations, modules, circuits, and steps have been described above generally in terms of their functionality. Whether such functionality is implemented as hardware or software depends upon the particular application and design constraints imposed on the overall system. The skilled reader may implement the described functionality in varying ways for each particular application, but such implementation decisions should not be interpreted as causing a departure from the scope of the present disclosure, which is set out in the appended claims.

The steps of a method or algorithm described in connection with the embodiments disclosed herein may be embodied directly in hardware, in a software module executed by a processor, or in a combination of the two. A software module may reside in random access memory (RAM), flash memory, read-only memory (ROM), programmable read-only memory (PROM), erasable programmable read-only memory (EPROM), electrically erasable programmable read-only memory (EEPROM), registers, hard disk, a removable disk, a compact disc read-only memory (CD-ROM), or any other form of storage medium known in the art. An exemplary storage medium is coupled to the processor such that the processor can read information from, and write information to, the storage medium. In the alternative, the storage medium may be integral to the processor. The processor and the storage medium may reside in an application-specific integrated circuit (ASIC). The ASIC may reside in a computing device or a user terminal. In the alternative, the processor and the storage medium may reside as discrete components in a computing device or user terminal.

The previous description of the disclosed embodiments is provided to enable any person skilled in the art to make or use the disclosed embodiments. Various modifications to these embodiments will be readily apparent to those skilled in the art, and the principles defined herein may be applied to other embodiments without departing from the scope of the disclosure. Thus, the present disclosure is not intended to be limited to the embodiments shown herein but is to be accorded the widest scope possible consistent with the principles and novel features as defined by the following claims.

**Claims**

1. A computer-implemented method of determining a destination of an aircraft, the method comprising:

   obtaining data comprising a plurality of data points for the flight of an aircraft over a sector, each data point being indicative of a position of the aircraft including its latitude, longitude and altitude at a corresponding time; determining (210), based on the data: i) a last data point (L) for the sector that comprises a position of the aircraft and a time for the last-received data point of the aircraft over the sector, ii) a top of descent data point (TOD) that comprises a position of the aircraft and a time at which the aircraft reached a top of descent, iii) a rate of descent of the aircraft, and iv) an extrapolation distance using the rate of descent of the aircraft and the surface distance travelled by the aircraft between the top of decent data point and the last data point, the extrapolation distance being a surface distance for the aircraft to travel to reach ground; and in response to the altitude of the aircraft at the last data point for the sector being below an altitude threshold, identifying one or more airports within the extrapolation distance from the position of the aircraft at the last data point for the sector and determining (220) the destination of the aircraft based on the identified one or more airports within the extrapolation distance.

2. The method of claim 1, wherein determining the destination of the aircraft based on the identified one or more airports comprises:
   in response to identifying a plurality of airports within the extrapolation distance from the position of the aircraft at the last data point for the sector, selecting a destination airport from the plurality of airports based on one or more of:

   i) historic flight data of the aircraft, whether an airport within the plurality of airports is indicated to be a home base or engineering base of the aircraft,
   ii) a distance between the aircraft position at the last data point and an extended runway centreline of an airport within the identified plurality of airports,
   iii) a comparison between a direction of travel of the aircraft and a runway direction of an airport, and
   iv) a comparison between a direction of travel of the aircraft and a bearing from the aircraft to an airport within the identified plurality of airports.

3. The method of claim 1 or claim 2, comprising:

   determining, based on the data, a top of climb data point (TOC) that comprises a position of the aircraft and a time at which the aircraft reached a top of climb; and
   selecting a destination airport from the plurality of identified airports based on a position of the aircraft at the last data point and a line between the positions of the aircraft at the top of climb and top of descent data points.

4. The method of any of claims 1 to 3, wherein obtaining data comprising a plurality of data points for the flight of an aircraft over a sector comprises identifying a break in data points for the aircraft and processing the data points either side of the break to predict if the aircraft has begun a new sector following the break in data points.

5. The method of claim 4, wherein predicting if the aircraft has begun a new sector comprises comparing a distance between the position of the aircraft before the break and the position of the aircraft after the break with a distance based on the duration of the break and the aircraft's cruise speed, the distance between the positions of the aircraft before and after the break being preferably calculated as the great circle distance between the latitudes and longitudes of the aircraft before and after the break.

6. The method of claim 5, wherein a new sector is predicted not to have begun in response to determining based on the comparison that the distance between the position of the aircraft before the break and the position of the aircraft after the break is too large for the aircraft to have landed during the break.

7. The method of any of claims 1 to 6, further comprising estimating for the aircraft a time of arrival at the destination based on calculating the distance between the destination airport and the position of the aircraft at the last-received point, and further based on the cruise speed of the aircraft.

8. The method of claim 8, wherein the distance between the destination airport and the position of the aircraft at the last-received point is calculated based on the great circle distance between the destination airport and the position of the aircraft at the last-received point.

9. The method of claim 1, further comprising determining an origin of the aircraft by:

determining (210), based on the data: i) a first data point (F) for the sector that comprises a position of the aircraft and a time for the first-received data point of the aircraft over the sector, ii) a top of climb data point (TOC) that comprises a position of the aircraft and a time at which the aircraft reached a top of climb, iii) a rate of climb of the aircraft, and iv) a second extrapolation distance using the rate of climb of the aircraft and the surface distance travelled by the aircraft between the top of climb data point and the first data point for the aircraft over the sector, the second extrapolation distance being a surface distance for the aircraft to have travelled from ground to the position of the first data point; and

in response to the altitude of the aircraft at the first data point for the sector being below an altitude threshold, identifying one or more airports within the second extrapolation distance from the first data point and determining (220) the origin of the aircraft based on the identified one or more airports within the second extrapolation distance.

10. A computer-implemented method comprising:

receiving an aircraft charter request, the aircraft charter request including source and destination information, details of a cargo, and a required time of arrival;

determining, for one or more aircraft, whether the aircraft can be used as a charter aircraft for the aircraft charter request based on a location of the aircraft, a speed of the aircraft and a destination of the aircraft, the destination of the aircraft being determined by a method according to any of claims 1 to 8;

in response to determining that the aircraft can be used as a charter aircraft for the aircraft charter request, transmitting the aircraft charter request to an operator of the aircraft.

11. The method of claim 10, wherein the method further comprises obtaining information of the carrying capacity of the one or more aircraft and wherein determining whether an aircraft can be used as a charter aircraft for the aircraft charter request comprises comparing one or more dimensions of the cargo and/or a weight of the cargo with the information of the carrying capacity obtained for the aircraft.

12. A system comprising:

a memory for storing data obtained by the system; and
one or more processors configured to:

obtain data comprising a plurality of data points for the flight of an aircraft over a sector, each data point being indicative of a position of the aircraft including its latitude, longitude and altitude at a corresponding time;

determine, based on the data: i) a last data point for the sector that comprises a position of the aircraft and a time for the last-received data point of the aircraft over the sector, ii) a top of descent data point that comprises a position of the aircraft and a time at which the aircraft reached a top of descent, iii) a rate of descent of the aircraft, and iv) an extrapolation distance using the rate of descent of the aircraft and the surface distance travelled by the aircraft between the top of decent data point and the last data point, the extrapolation distance being a surface distance for the aircraft to travel to reach ground; and

in response to the altitude of the aircraft at the last data point for the sector being below an altitude threshold, identify one or more airports within the extrapolation distance from the position of the aircraft at the last data point for the sector and determine the destination of the aircraft based on the identified one or more airports within the extrapolation distance.

13. A system comprising:

a memory for storing data obtained by the system; and
one or more processors configured to:

receive an aircraft charter request, the aircraft charter request including source and destination information, details of a cargo, and a required time of arrival;

determine, for one or more aircraft, whether the aircraft can be used as a charter aircraft for the aircraft charter request based on a location of the aircraft, a speed of the aircraft and a destination of the aircraft, the destination of the aircraft being determined by a method according to any of claims 1 to 8; and

in response to determining that the aircraft can be used as a charter aircraft for the aircraft charter request, transmit the aircraft charter request to an operator of the aircraft.

14. The system of claim 13, further comprising one or both of:

a first computer terminal configured to transmit the aircraft charter request to the one or more processors of claim 13; and
a second computer terminal configured to receive the aircraft charter request from the one or more processors of claim 13.

15. A computer-readable medium having instructions stored thereon that, when executed by one or more processors, cause the one or more processors to carry out a method according to any of claims 1 to 11.

**Patentansprüche**

1. Computerimplementiertes Verfahren zum Bestimmen eines Zielorts eines Flugzeugs, wobei das Verfahren Folgendes beinhaltet:

Erhalten von Daten, die mehrere Datenpunkte für den Flug eines Flugzeugs über einen Sektor umfassen, wobei jeder Datenpunkt eine Position des Flugzeugs einschließlich seines Breitengrads, seines Längengrads und seiner Höhe zu einem entsprechenden Zeitpunkt angibt;
Bestimmen (210), auf der Basis der Daten: i) eines letzten Datenpunkts (L) für den Sektor, der eine Position des Flugzeugs und einen Zeitpunkt für den zuletzt empfangenen Datenpunkt des Flugzeugs über dem Sektor umfasst, ii) eines TOD-(Top of Descent)-Datenpunkts, der eine Position des Flugzeugs und einen Zeitpunkt umfasst, zu dem das Flugzeug einen oberen Sinkflugpunkt erreicht hat, iii) einer Sinkgeschwindigkeit des Flugzeugs und iv) einer Extrapolationsdistanz anhand der Sinkgeschwindigkeit des Flugzeugs und der Distanz über Boden, die das Flugzeug zwischen dem TOD-Datenpunkt und dem letzten Datenpunkt zurückgelegt hat, wobei die Extrapolationsdistanz eine Distanz über Boden ist, die das Flugzeug zurücklegen muss, um den Boden zu erreichen; und
Identifizieren, als Reaktion darauf, dass die Höhe des Flugzeugs am letzten Datenpunkt für den Sektor unter einem Höhenschwellenwert liegt, eines oder mehrerer Flughäfen innerhalb der Extrapolationsdistanz von der Position des Flugzeugs am letzten Datenpunkt für den Sektor und Bestimmen (220) des Zielorts des Flugzeugs auf der Basis der ein oder mehreren identifizierten Flughäfen innerhalb der Extrapolationsdistanz.

2. Verfahren nach Anspruch 1, wobei das Bestimmen des Zielorts des Flugzeugs auf der Basis der ein oder mehreren identifizierten Flughäfen Folgendes beinhaltet:
Auswählen, als Reaktion auf das Identifizieren mehrerer Flughäfen innerhalb der Extrapolationsdistanz von der Position des Flugzeugs am letzten Datenpunkt für den Sektor, eines Zielflughafens der mehreren Flughäfen auf der Basis von einem oder mehreren von:

i) historischen Flugdaten des Flugzeugs, ob ein Flughafen innerhalb der mehreren Flughäfen als Heimatbasis oder technische Basis des Flugzeugs angegeben ist,
ii) einer Distanz zwischen der Flugzeugposition am letzten Datenpunkt und einer verlängerten Landebahnmittellinie eines Flughafens innerhalb der identifizierten mehreren Flughäfen,
iii) einem Vergleich zwischen einer Bewegungsrichtung des Flugzeugs und einer Landebahnrichtung eines Flughafens, und
iv) einem Vergleich zwischen einer Bewegungsrichtung des Flugzeugs und einer Peilung vom Flugzeug zu einem Flughafen innerhalb der identifizierten mehreren Flughäfen.

3. Verfahren nach Anspruch 1 oder Anspruch 2, das Folgendes beinhaltet:

Bestimmen, auf der Basis der Daten, eines TOC-(Top of Climb)-Datenpunkts, der eine Position des Flugzeugs und einen Zeitpunkt umfasst, zu dem das Flugzeug einen oberen Steigflugpunkt erreichte; und
Auswählen eines Zielflughafens aus den mehreren identifizierten Flughäfen auf der Basis einer Position des Flugzeugs am letzten Datenpunkt und einer Linie zwischen den Positionen des Flugzeugs am TOC- und am TOD-Datenpunkt.

4. Verfahren nach einem der Ansprüche 1 bis 3, wobei das Erhalten von Daten, die mehrere Datenpunkte für den Flug eines Flugzeugs über einen Sektor umfassen, das Identifizieren einer Unterbrechung in Datenpunkten für das Flugzeug und das Verarbeiten der Datenpunkte auf beiden Seiten der Unterbrechung beinhaltet, um vorherzusagen, ob das Flugzeug einen neuen Sektor nach der Unterbrechung in Datenpunkten begonnen hat.

5. Verfahren nach Anspruch 4, wobei das Vorhersagen, ob das Flugzeug einen neuen Sektor begonnen hat, das Vergleichen einer Distanz zwischen der Position des Flugzeugs vor der Unterbrechung und der Position des Flugzeugs nach der Unterbrechung mit einer Distanz auf der Basis der Dauer der Unterbrechung und der Reisegeschwindigkeit des Flugzeugs beinhaltet, wobei die Distanz zwischen den Positionen des Flugzeugs vor und nach der Unterbrechung vorzugsweise als die Großkreisdistanz zwischen den Breiten- und Längengraden des Flugzeugs vor und nach der Unterbrechung berechnet wird.

6. Verfahren nach Anspruch 5, wobei als Reaktion auf die auf dem Vergleich basierende Feststellung, dass die Distanz zwischen der Position des Flugzeugs vor der Unterbrechung und der Position des Flugzeugs nach der Unterbrechung für das Flugzeug zu groß ist, um innerhalb der Unterbrechung zu landen, vorhergesagt wird, dass kein neuer Sektor begonnen hat.

7. Verfahren nach einem der Ansprüche 1 bis 6, das ferner das Schätzen einer Ankunftszeit am Zielort für das Flugzeug auf der Basis der Berechnung der Distanz zwischen dem Zielflughafen und der Position des Flugzeugs am zuletzt empfangenen Punkt und ferner auf der Basis der Reisegeschwindigkeit des Flugzeugs beinhaltet.

8. Verfahren nach Anspruch 8, wobei die Distanz zwischen dem Zielflughafen und der Position des Flugzeugs am zuletzt empfangenen Punkt auf der Basis der Großkreisdistanz zwischen dem Zielflughafen und der Position des Flugzeugs am zuletzt empfangenen Punkt berechnet wird.

9. Verfahren nach Anspruch 1, das ferner das Bestimmen eines Ausgangspunkts des Flugzeugs beinhaltet durch:

   Bestimmen (210), auf der Basis der Daten: i) eines ersten Datenpunkts (F) für den Sektor, der eine Position des Flugzeugs und einen Zeitpunkt für den ersten empfangenen Datenpunkt des Flugzeugs über dem Sektor umfasst, ii) eines TOC-(Top of Climb)-Datenpunkts, der eine Position des Flugzeugs und einen Zeitpunkt umfasst, zu dem das Flugzeug den oberen Steigflugpunkt erreicht hat, iii) einer Steiggeschwindigkeit des Flugzeugs, und iv) einer zweiten Extrapolationsdistanz anhand der Steiggeschwindigkeit des Flugzeugs und der vom Flugzeug zwischen dem TOC-Datenpunkt und dem ersten Datenpunkt für das Flugzeug über dem Sektor zurückgelegten Distanz über Boden, wobei die zweite Extrapolationsdistanz eine Distanz über Boden ist, die das Flugzeug vom Boden zur Position des ersten Datenpunkts zurückgelegt haben muss; und
   Identifizieren, als Reaktion darauf, dass die Höhe des Flugzeugs am ersten Datenpunkt für den Sektor unter einem Höhenschwellenwert liegt, eines oder mehrerer Flughäfen innerhalb der zweiten Extrapolationsdistanz vom ersten Datenpunkt und Bestimmen (220) des Ausgangspunkts des Flugzeugs auf der Basis der ein oder mehreren identifizierten Flughäfen innerhalb der zweiten Extrapolationsdistanz.

10. Computerimplementiertes Verfahren, das Folgendes beinhaltet:

   Empfangen einer Flugzeugcharteranfrage, wobei die Flugzeugcharteranfrage Start- und Zielinformationen, Einzelheiten über eine Fracht und eine erforderliche Ankunftszeit enthält;
   Feststellen, für ein oder mehrere Flugzeuge, ob das Flugzeug als Charterflugzeug für die Flugzeugcharteranfrage verwendet werden kann, auf der Basis eines Standorts des Flugzeugs, einer Geschwindigkeit des Flugzeugs und eines Zielorts des Flugzeugs, wobei der Zielort des Flugzeugs mit einem Verfahren nach einem der Ansprüche 1 bis 8 bestimmt wird;
   Übertragen, als Reaktion auf die Feststellung, dass das Flugzeug als Charterflugzeug für die Flugzeugcharteranfrage verwendet werden kann, der Flugzeugcharteranfrage zu einem Betreiber des Flugzeugs.

11. Verfahren nach Anspruch 10, wobei das Verfahren ferner das Erhalten von Informationen über die Tragfähigkeit der ein oder mehreren Flugzeuge beinhaltet, und wobei das Feststellen, ob ein Flugzeug als Charterflugzeug für die Flugzeugcharteranfrage verwendet werden kann, das Vergleichen einer oder mehrerer Abmessungen der Fracht und/oder eines Gewichts der Fracht mit den für das Flugzeug erhaltenen Tragfähigkeitsinformationen beinhaltet.

12. System, das Folgendes umfasst:

   einen Speicher zum Speichern von durch das System erhaltenen Daten; und

einen oder mehrere Prozessoren, konfiguriert zum:

Erhalten von Daten, die mehrere Datenpunkte für den Flug eines Flugzeugs über einen Sektor umfassen, wobei jeder Datenpunkt eine Position des Flugzeugs einschließlich seines Breitengrads, seines Längengrads und seiner Höhe zu einem entsprechenden Zeitpunkt angibt;

Bestimmen, auf der Basis der Daten: i) eines letzten Datenpunkts für den Sektor, der eine Position des Flugzeugs und einen Zeitpunkt für den zuletzt empfangenen Datenpunkt des Flugzeugs über dem Sektor umfasst, ii) eines TOD-Datenpunkts, der eine Position des Flugzeugs und einen Zeitpunkt umfasst, zu dem das Flugzeug einen oberen Sinkflugpunkt erreicht hat, iii) einer Sinkgeschwindigkeit des Flugzeugs und iv) einer Extrapolationsdistanz anhand der Sinkgeschwindigkeit des Flugzeugs und der von dem Flugzeug zwischen dem oberen Sinkflugdatenpunkt und dem letzten Datenpunkt zurückgelegten Distanz über Boden, wobei die Extrapolationsdistanz eine Distanz über Boden ist, die das Flugzeug zurücklegen muss, um den Boden zu erreichen; und

Identifizieren, als Reaktion darauf, dass die Höhe des Flugzeugs am letzten Datenpunkt für den Sektor unter einem Höhenschwellenwert liegt, eines oder mehrerer Flughäfen innerhalb der Extrapolationsdistanz von der Position des Flugzeugs am letzten Datenpunkt für den Sektor und Bestimmen des Zielorts des Flugzeugs auf der Basis der ein oder mehreren identifizierten Flughäfen innerhalb der Extrapolationsdistanz.

**13.** System, das Folgendes umfasst:

einen Speicher zum Speichern von durch das System erhaltenen Daten; und
einen oder mehrere Prozessoren, konfiguriert zum:

Empfangen einer Flugzeugcharteranfrage, wobei die Flugzeugcharteranfrage Start- und Zielinformationen, Einzelheiten über eine Fracht und eine erforderliche Ankunftszeit enthält;

Feststellen, für ein oder mehrere Flugzeuge, ob das Flugzeug als Charterflugzeug für die Flugzeugcharteranfrage verwendet werden kann, auf der Basis eines Standorts des Flugzeugs, einer Geschwindigkeit des Flugzeugs und eines Zielorts des Flugzeugs, wobei der Zielort des Flugzeugs mit einem Verfahren nach einem der Ansprüche 1 bis 8 bestimmt wird; und

Übertragen, als Reaktion auf die Feststellung, dass das Flugzeug als Charterflugzeug für die Flugzeugcharteranfrage verwendet werden kann, der Flugzeugcharteranfrage zu einem Betreiber des Flugzeugs.

**14.** System nach Anspruch 13, das ferner eines oder beide umfasst von:

einem ersten Computerterminal, das zum Übertragen der Flugzeugcharteranfrage zu den ein oder mehreren Prozessoren nach Anspruch 13 konfiguriert ist; und
einem zweiten Computerterminal, das zum Empfangen der Flugzeugcharteranfrage von den ein oder mehreren Prozessoren nach Anspruch 13 konfiguriert ist.

**15.** Computerlesbares Medium mit darauf gespeicherten Befehlen, die bei Ausführung durch ein oder mehrere Prozessoren die ein oder mehreren Prozessoren zum Durchführen eines Verfahrens nach einem der Ansprüche 1 bis 11 veranlassen.

**Revendications**

**1.** Procédé mis en oeuvre par ordinateur pour déterminer la destination d'un aéronef, le procédé comprenant :

l'obtention de données comprenant une pluralité de points de données pour le vol d'un aéronef au-dessus d'un secteur, chaque point de données étant indicatif d'une position de l'aéronef comportant sa latitude, sa longitude et son altitude à un temps correspondant ;
la détermination (210), en fonction des données : i) d'un dernier point de données (L) pour le secteur qui comprend une position de l'aéronef et un temps pour le dernier point de données reçu de l'aéronef au-dessus du secteur, ii) d'un point de données de début de descente (TOD) qui comprend une position de l'aéronef et un temps auquel l'aéronef a atteint un début de descente, iii) d'une vitesse verticale de descente de l'aéronef, et iv) d'une distance d'extrapolation à l'aide de la vitesse verticale de descente de l'aéronef et de la distance parcourue par l'aéronef entre le début de descente du point de données et le dernier point de données, la distance d'extrapolation étant une distance de surface que l'aéronef doit parcourir pour atteindre le sol ; et lorsque l'altitude de l'aéronef au dernier point de données pour le secteur est inférieure à un seuil d'altitude, l'identification d'un ou plusieurs aéroports situés en-deçà de la distance d'extrapolation à partir de la position de l'aéronef au dernier point de données pour le secteur et la détermination (220) de la destination de l'aéronef en fonction des un ou plusieurs des aéroports identifiés en-deçà la distance d'extrapolation.

2.  Procédé selon la revendication 1, dans lequel la détermination de la destination de l'aéronef en fonction des un ou plusieurs aéroports identifiés comprend :
    en réponse à l'identification d'une pluralité d'aéroports en-deçà de la distance d'extrapolation à partir de la position de l'aéronef au dernier point de données pour le secteur, la sélection d'un aéroport de destination parmi la pluralité d'aéroports en fonction au moins :

    i) de données de vol historiques de l'aéronef, qu'un aéroport parmi la pluralité d'aéroports est indiqué en tant que base d'affectation ou en tant que base d'ingénierie de l'aéronef,
    ii) d'une distance entre la position de l'aéronef au dernier point de données et un axe de piste prolongé d'un aéroport parmi la pluralité identifiée d'aéroports,
    iii) d'une comparaison entre une direction de déplacement de l'aéronef et une direction de piste d'un aéroport, et
    iv) d'une comparaison entre une direction de déplacement de l'aéronef et un relèvement de l'aéronef vers un aéroport parmi la pluralité identifiée d'aéroports.

3.  Procédé selon la revendication 1 ou la revendication 2, comprenant :

    la détermination, en fonction des données, d'un point de données de fin de montée (TOC) qui comprend une position de l'aéronef et un temps auquel l'aéronef a atteint un fin de montée ; et
    la sélection d'un aéroport de destination parmi la pluralité d'aéroports identifiés en fonction d'une position de l'aéronef au dernier point de données et d'une ligne entre les positions de l'aéronef aux points de données de fin de montée et de début de descente.

4.  Procédé selon l'une quelconque des revendications 1 à 3, dans lequel l'obtention de données comprenant une pluralité de points de données pour le vol d'un aéronef au-dessus d'un secteur comprend l'identification d'une pause dans des points de données de l'aéronef et le traitement des points de données de chaque côté de la pause pour prédire que l'aéronef a commencé ou non un nouveau secteur après la pause de points de données.

5.  Procédé selon la revendication 4, dans lequel la prédiction que l'aéronef a commencé ou non un nouveau secteur comprend la comparaison d'une distance entre la position de l'aéronef avant la pause et la position de l'aéronef après la pause à une distance basée sur la durée de la pause et la vitesse de croisière de l'aéronef, la distance entre les positions de l'aéronef avant et après la pause étant de préférence calculée comme la distance orthodromique entre les latitudes et longitudes de l'aéronef avant et après la pause.

6.  Procédé selon la revendication 5, dans lequel il est prédit qu'un nouveau secteur n'a pas commencé en réponse à la détermination, en fonction de la comparaison, que la distance entre la position de l'aéronef avant la pause et la position de l'aéronef après la pause est trop grande pour que l'aéronef ait atterri durant la pause.

7.  Procédé selon l'une quelconque des revendications 1 à 6, comprenant en outre l'estimation pour l'aéronef d'un temps d'arrivée à destination en fonction d'un calcul de la distance entre l'aéroport de destination et la position de l'aéronef au dernier point reçu, et en fonction en outre de la vitesse de croisière de l'aéronef.

8.  Procédé selon la revendication 8, dans lequel la distance entre l'aéroport de destination et la position de l'aéronef au dernier point reçu est calculée en fonction de la distance orthodromique entre l'aéroport de destination et la position de l'aéronef au dernier point reçu.

9.  Procédé selon la revendication 1, comprenant en outre la détermination d'une origine de l'aéronef par :

    détermination (210), en fonction des données : i) d'un premier point de données (F) pour le secteur qui comprend une position de l'aéronef et un temps pour le premier point de données reçu de l'aéronef au-dessus du secteur, ii) d'un point de données de fin de montée (TOC) qui comprend une position de l'aéronef et un temps auquel l'aéronef a atteint une fin de montée, iii) d'une vitesse verticale de montée de l'aéronef, et iv) d'une deuxième distance d'extrapolation à l'aide de la vitesse verticale de montée de l'avion et de la distance de surface parcourue par l'avion entre le point de données de fin de montée et le premier point de données pour l'aéronef au-dessus du secteur, la deuxième distance d'extrapolation étant une distance de surface que l'avion a parcouru depuis le sol jusqu'à la position du premier point de données ; et

lorsque l'altitude de l'aéronef au premier point de données pour le secteur est inférieure à un seuil d'altitude, l'identification d'un ou plusieurs aéroports situés en-deçà de la deuxième distance d'extrapolation à partir du premier point de données et la détermination (220) de l'origine de l'aéronef en fonction des un ou plusieurs aéroports identifiés situés en-deçà de la deuxième distance d'extrapolation.

10. Procédé mis en oeuvre par ordinateur comprenant :

la réception d'une demande d'affrètement d'aéronef, la demande d'affrètement d'aéronef comprenant des informations de source et de destination, les renseignements d'un fret et un temps d'arrivée requis ;

la détermination, pour un ou plusieurs aéronefs, que l'aéronef peut être utilisé ou non comme aéronef nolisé pour la demande d'affrètement d'aéronef en fonction d'une position de l'aéronef, d'une vitesse de l'aéronef et d'une destination de l'aéronef, la destination de l'aéronef étant déterminée par un procédé selon l'une quelconque des revendications 1 à 8 ;

en réponse à la détermination que l'aéronef peut être utilisé comme aéronef nolisé pour la demande d'affrètement d'aéronef, la transmission de la demande d'affrètement d'aéronef à l'exploitant de l'aéronef.

11. Procédé selon la revendication 10, le procédé comprenant en outre l'obtention d'informations sur la capacité de charge des un ou plusieurs aéronefs et dans lequel la détermination qu'un aéronef peut être utilisé ou non comme aéronef nolisé pour la demande d'affrètement d'aéronef comprend la comparaison d'une ou plusieurs dimensions du fret et/ou d'un poids du fret aux informations de capacité de charge obtenues pour l'aéronef.

12. Système comprenant :

une mémoire pour stocker des données obtenues par le système ; et
un ou plusieurs processeurs configurés pour :

obtenir des données comprenant une pluralité de points de données pour le vol d'un aéronef au-dessus d'un secteur, chaque point de données étant indicatif d'une position de l'aéronef comportant sa latitude, sa longitude et son altitude à un temps correspondant ;

déterminer, en fonction des données : i) un dernier point de données pour le secteur qui comprend une position de l'aéronef et un temps pour le dernier point de données reçu de l'aéronef au-dessus du secteur, ii) un point de données de début de descente qui comprend une position de l'aéronef et un temps auquel l'aéronef a atteint un début de descente, iii) une vitesse verticale de descente de l'aéronef, et iv) une distance d'extrapolation à l'aide de la vitesse verticale de descente de l'aéronef et de la distance parcourue par l'aéronef entre le point de données de début de descente et le dernier point de données, la distance d'extrapolation étant une distance de surface que l'aéronef doit parcourir pour atteindre le sol ; et

lorsque l'altitude de l'aéronef au dernier point de données pour le secteur est inférieure à un seuil d'altitude, identifier un ou plusieurs aéroports en-deçà de la distance d'extrapolation à partir de la position de l'aéronef au dernier point de données du secteur et déterminer la destination de l'aéronef en fonction des un ou plusieurs aéroports identifiés en-deçà de la distance d'extrapolation.

13. Système comprenant :

une mémoire pour stocker des données obtenues par le système ; et
un ou plusieurs processeurs configurés pour :

recevoir une demande d'affrètement d'aéronef, la demande d'affrètement d'aéronef comportant des informations de source et de destination, des renseignements d'un fret et le temps d'arrivée requis ;

déterminer, pour un ou plusieurs aéronefs, que l'aéronef peut être utilisé comme aéronef nolisé pour la demande d'affrètement d'aéronef en fonction d'une position de l'aéronef, d'une vitesse de l'aéronef et d'une destination de l'aéronef, la destination de l'aéronef étant déterminée par un procédé selon l'une quelconque des revendications 1 à 8 ; et

en réponse à la détermination que l'aéronef peut être utilisé comme aéronef nolisé pour la demande d'affrètement d'aéronef, transmettre la demande d'affrètement d'aéronef à l'exploitant de l'aéronef.

**14.** Système selon la revendication 13, comprenant en outre :

un premier terminal informatique configuré pour transmettre la demande d'affrètement d'aéronef à un ou plusieurs processeurs selon la revendication 13 ; et/ou
un second terminal d'ordinateur configuré pour recevoir la demande d'affrètement d'aéronef de la part des un ou plusieurs processeurs selon la revendication 13.

**15.** Support lisible par ordinateur sur lequel sont stockées des instructions qui, à leur exécution par un ou plusieurs processeurs, amènent les un ou plusieurs processeurs à entreprendre un procédé selon l'une quelconque des revendications 1 à 11.

FIGURE 1

FIGURE 2

FIGURE 3

23

1000

Receive
charter
request

1010

j=1

j=j+1

No

Aircraft
j is active?

1020

Yes

No

Request
meets
packing
criteria?

1030

Yes

No

Aircraft j
can arrive
by RETA?

1040

Yes

Send charter request to
operator of aircraft j

1050

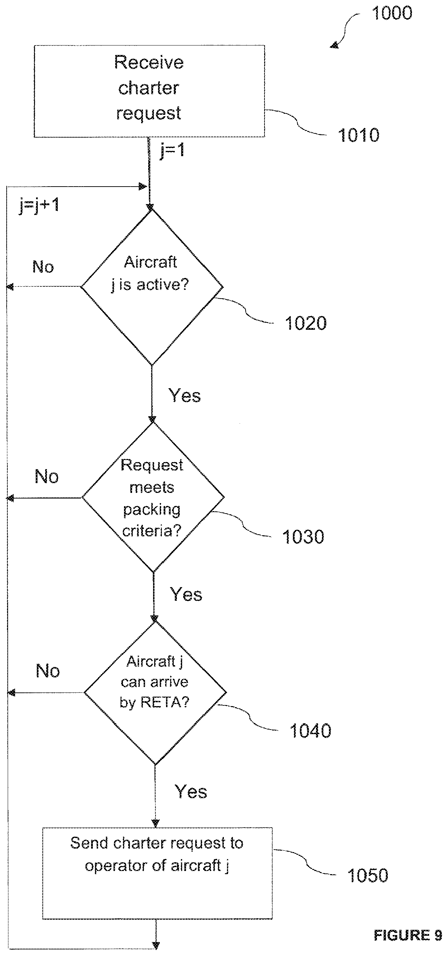

FIGURE 9

**FIGURE 5**

Payload                  *Payload-Range-Diagram*

60000.0

max_payload

[kg]          **A**

maximum payload,
maximum take-off mass

50000.0

40000.0

max_fuel_max_payload =            **B**

maximum fuel,
maximum take-off mass

20000.0

10000.0

maximum fuel,
no payload

0.0

0.0     2000.0     4000.0     6000.0     8000.0     10000.0     12000.0

Range                      [km]

max_load_range                  ferry_range

max_fuel_max_payload_range

**EP 3 980 722 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20180075757 A1